# EUROPEAN PATENT SPECIFICATION

(11) **EP 1 654 409 B1**
(45) Date of publication and mention of the grant of the patent: **26.08.2009**
(21) Application number: 04766320.8
(22) Date of filing: 27.07.2004
(51) Int. Cl.: D04H 1/46, D04H 3/10, D04H 5/02, D04H 13/00, B32B 5/26, A61F 13/15

(54) **HANDKERCHIEFS IN NON-WOVEN FABRIC**
TASCHENTÜCHER IN VLIESSTOFF
MOUCHOIRS EN NON-TISSE

(30) Priority: 29.07.2003 IT MI20031548
(43) Date of publication of application: 10.05.2006
(60) Divisional application: 08154932.1
(73) Proprietor: Orlandi S.p.A., 20122 Milano (IT)
(72) Inventor: ORLANDI, Vittorio, I-21010 ARSAGO SEPRIO (IT)
(74) Representative: Gerli, Paolo
(86) International application number: PCT/EP2004/051610
(87) International publication number: WO 2005/012618

(56) References cited:
- EP-A- 0 992 338
- EP-A- 1 091 035
- WO-A-01/49914
- WO-A-96/27044
- US-A- 3 485 706
- US-A- 3 916 447
- US-A- 5 524 759
- US-A- 6 001 381
- US-A1- 2002 078 538
- US-A1- 2003 023 218

## Description

### FIELD OF THE INVENTION

The present invention relates to the field of disposable handkerchiefs.

### STATE OF THE ART

Being typically non-disposable products, woven handkerchiefs must be returned, washed and pressed, to be re-used, thus causing a certain amount of inconvenience of use. For these reasons, disposable paper handkerchiefs have now almost completely replaced traditional woven ones. Nonetheless, if on the one hand paper handkerchiefs solve many problems of practicality and hygiene, they are not absent from limitations. In fact, they are products with a very delicate structure, easily breakable and unlikely to be re-used after a first use (in fact, paper handkerchiefs are produced to be water-degradable in order to make them easily dispersible, i.e. in toilets, etc.), and also have problems of exfoliation and loss of particles, obliging the user to dispose of them immediately after use.

Nonetheless, there are situations in which it is unnecessary to replace the handkerchief after the first use; these are cases in which there is a limited loss of organic fluids (i.e. light colds, frequent lacrimation, the need to mop perspiration from the forehead or hands, etc.). In these cases it could be useful to re-use the same handkerchief several times before disposing of it. However, in the case of paper handkerchiefs re-use is problematic due to the partial modification/breakage of the texture caused by the first use; the re-used paper handkerchief is also somewhat unpleasant aesthetically as it is crushed or partially modified in consistency and essentially unusable in the areas already saturated with fluid; the user is therefore obliged to extract the handkerchief carefully and select the areas of the handkerchief remaining integral: besides being inadvisable from the viewpoint of hygiene, this type of operation is somewhat unacceptable when the user is in public places and in close contact with other people.

In these cases, the user is therefore obliged to make use of a considerable number of disposable paper handkerchiefs, which are still discarded after each single use even if partly unused, always creating embarrassment over where to discard them; otherwise, the user must use a traditional woven handkerchief, which however has the drawbacks mentioned above.

The low level of re-usability of the paper handkerchief translates into it having little flexibility of use: in fact, owing to the need to make use of the handkerchief many times a day, the user tends to consume the same number of handkerchiefs, notwithstanding the volume of body fluids involved; consequently, a large number of paper handkerchiefs, even only partly utilized, may be wasted.

A further limitation of currently available handkerchiefs, whether made of paper or woven, is constituted by the fact that they contain a fixed quantity of absorbent material for each handkerchief: as a consequence each handkerchief may contain excessive or insufficient absorbent material, in any case inadequate with respect to the use for which it is required. Therefore, if on the one hand the absorbent power of the handkerchief may be insufficient for those making abundant use of it, for example those who suffer from allergies, with unpleasant consequences such as leakage of nasal mucous or other body fluids from the handkerchief, on the other hand for a child or adult who only makes ordinary use of the disposable handkerchief, the packs sold may be inappropriate as only a small part of each single handkerchief is utilized, with a considerable waste of paper. Besides this, there is the problem that the paper handkerchief utilized repeatedly, especially during a cold, causes painful and unpleasant reddening of the skin of the nose.

From the prior art, the following documents have been considered.

EP 1 091 035 discloses a single-layered hydroentangled non woven modified by microcreeping, useful as wiping article. WO 01/49914 discloses a two-layered hydroentanlged composite for molding substrates in the automotive industry, geotextiles, wiping materials and disposable garments. EP 992 338 describes a hydroentangled three-ply web in the manufacture of towels, wet wipes, industrial wipes, and medical owns. US 2002/0078538 describes a flushable wipe consisting of two non woven hydroentangled layers. WO 96/27044 describes a plasma- treated hydroentangled non woven material as a wiping material for household or industrial applications, and in the health care sector. No handkerchiefs are mentioned in the above publications. US 3,916,447 discloses a non-hydroentanlged three-layered handkerchief whose internal layer is made of synthetic microfibers and the two outer layers are made of cellulose fibers.

In the light of the drawbacks mentioned above, there is the need for a handkerchief destined to be discarded of after several uses which maintains, during the entire cycle of use, a high level of mechanical integrity and softness, an aesthetically acceptable appearance comparable to the woven handkerchief, an adequate absorbent power and which does not cause painful irritation of the skin; also desirable is a handkerchief which is versatile to be used for a wide range of needs to absorb body fluids and which is as similar as possible in appearance to a woven handkerchief which, notwithstanding cost, is in any case always the better product, from an aesthetic and functional viewpoint.

### SUMMARY

The object of the present invention is achieved by the use of a base material of spunlace non-woven fibers for the production of a disposable handkerchief suitable to be re-used repeatedly before being discarded. The handkerchief is constituted by a multi-layer structure of spunlace non-woven fabric. The fibers of the non-woven fabric are bonded stably to each other through known systems, preferably hydroentangling. The handkerchief may also comprise further layers constituted of non-woven or spunbonded fibers and/or cellulose fibers.

The handkerchiefs thus obtained have considerable strength and softness and, thanks to the possibility of repeated use before being discarded, offer flexible use for various absorption cycles of body fluids. Their versatility of use may be further increased by providing a pack of the aforesaid handkerchiefs comprising handkerchiefs with different absorbent powers; the different absorbent power may be obtained by varying the thickness, grammage, finish and dimensions of the handkerchief, and the concentration of fibres. The packs containing the aforesaid products in different number and dimensions, form a further object of the invention. These handkerchiefs have the aesthetic advantage of reproducing, embossed or printed, the patterns typical of woven handkerchiefs, may be of larger dimensions; moreover, they do not irritate the skin and, owing to the particular nature of the spunlace non-woven fabric, eliminate the sensation of dampness on the hand of the user.

The invention also relates to the use of a base product of non-woven fibers in the preparation of a handkerchief suitable to be discarded after a repeated number of uses, and the process to prepare said handkerchiefs and their packaging.

The characteristics and advantages of the present invention shall be explained in detail in the following description.

### DESCRIPTION OF THE FIGURES

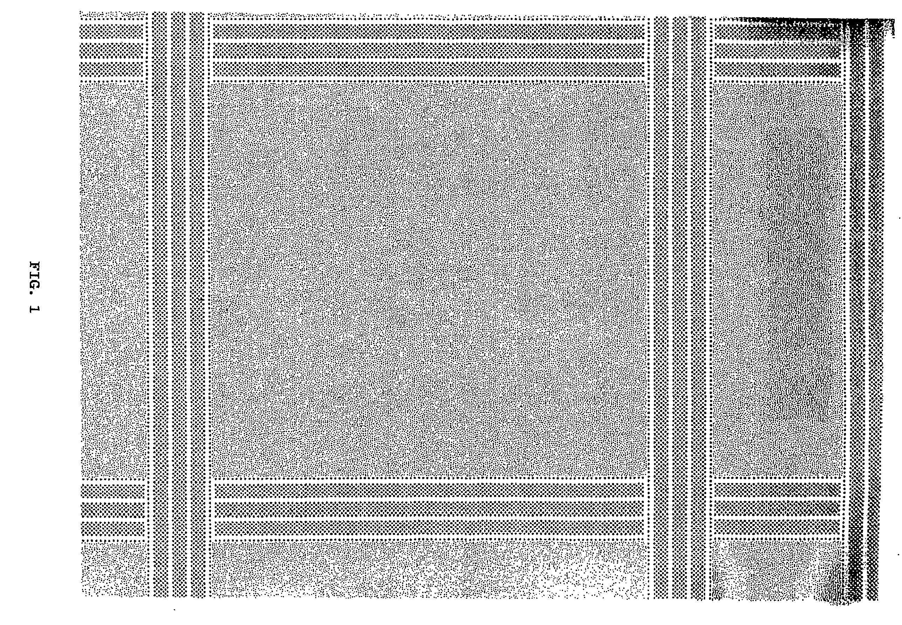

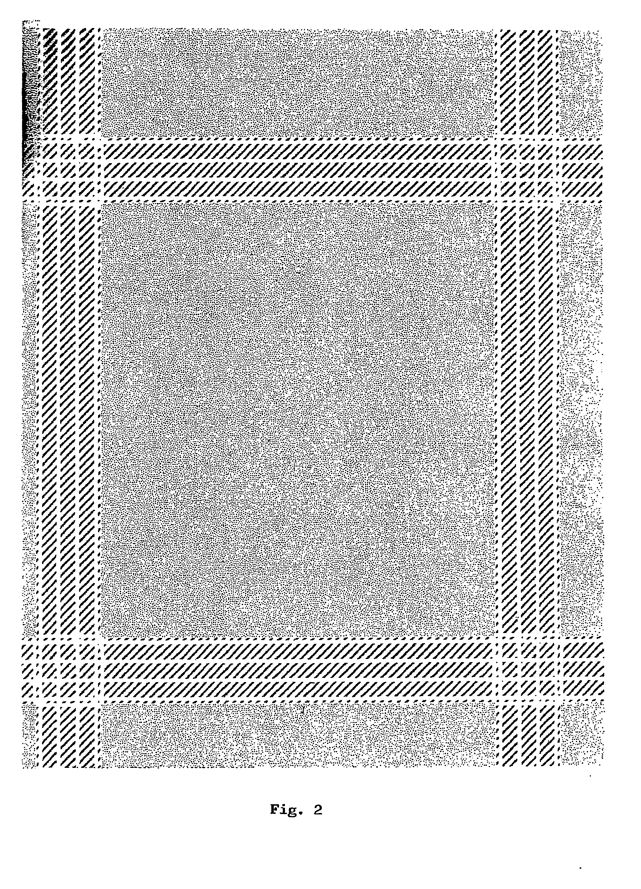

**Figures 1-2****:** examples of handkerchiefs according to the invention.

### DETAILED DESCRIPTION OF THE INVENTION

The object of the invention is achieved by the use of a base material of spunlace non-woven fibers for the production of a disposable handkerchief suitable to be discarded after a repeated number of uses, indicatively after one day, comprising one or more layers of fibers, wherein at least one layer is composed of spunlace non-woven fibers. According to two preferred embodiments the handkerchief is composed of a single layer of non-woven fibers, or by two or more superimposed layers of non-woven fibers: in this case at least one of the two or more layers is made of cellulose pulp or all the layers are based on synthetic fibers; the cellulose layer, where present, is preferably not the outmost layer, but interposed between layers of non-woven fibres. The preferred embodiment is that of a handkerchief with three layers, wherein the two outer layers are based on non-woven fibers and the internal one is based on cellulose fibers.

The handkerchief forming the object of the present invention is always definable as essentially "non paper", as it is made of spunlace non-woven fabric. The non-woven component is in fact the essential component, responsible for the characteristics of the handkerchief, in particular for its re-use after a first use, and for maintaining an aesthetically acceptable structure (see form and original folding, surface regularity, absence of creases, noteworthy thickness, softness and consistency even when damp, surfaces embossed, coloured, printed or treated with various substances); the non-woven fabric also guarantees the absorbent capacity of the handkerchief, even in the total absence of cellulose material.

The non-woven fabric is obtained by means of known technology, for example with card webs or with the spunbonded system. Preferably, the spunlace non-woven is further consolidated by means of known systems, in particular by means of hydroentangling. Hydroentangling is performed with per se know systems, by projecting thin jets of water at high pressure onto the product; at the end of treatment, the free water remaining trapped between the fibers is eliminated by drying. Hydroentangling can be performed on a single layer of fibers or on superimposed multilayer structures: in the case of the latter hydroentangling not only consolidates the fibers inside each layer but also promotes interlacing between contiguous layers. The non-woven fibers are preferably chosen from fibers of polyester, polypropylene, acrylic, viscose, PLA, LYOCEL and their blends. In a preferred embodiment, the handkerchief is composed of a single layer of spunlace non-woven fabric constituted by fibers chosen from polyester, viscose, and blends chosen from polyester/viscose, polypropylene/viscose and polyester/polypropylene/viscose, polyester/polypropylene/polyester, viscose/polypropylene/viscose. When the product of the invention comprises several superimposed layers, the layers of non-woven fabric are preferably constituted by fibers chosen from polypropylene, viscose, polyester and their blends, and at least one layer constituted by cellulose pulp is present.

The non-woven fibers used (artificial, natural) have dimensions ranging from 0.8 to 3.3 dtx, while the cellulose pulp has its natural dimension.

The product has the typical dimensions of common paper and woven handkerchiefs, ranging from 20 to 50 cm per side.

The handkerchief preferably has patterns or borders on the entire upper and lower surface of the handkerchief, or only around the outer edge. These patterns can be impressed by printing with inks and/or by means of heat embossing (calendering) or by bonding, or with hydroentangled pattern technologies. The impressing of patterns does not only perform a decorative function, but also provides the structure with additional consolidation and finish. The grammage of the handkerchief ranges from 30 to 100 g/m².

The products of the invention may be packaged In individual or multiple packs, comprising a packaging wrapping and a variable number of handkerchiefs according to needs (i.e. from 1 to 31), for monthly, weekly consumption and so forth.

Therefore, a further object of the invention relates to a package comprising an adequate number of the aforesaid handkerchiefs, conventionally from 1 to 31, having the structure described above. The handkerchiefs essentially have an absorbent function: therefore they may be produced and packaged with scented, antibacterial, antiallergic, emollient, liquid or solid additive substances, absorbed in the texture of the handkerchief. The possibility of re-using the handkerchief one or more times after its initial use constitutes a first guarantee of the versatility of use of the handkerchief, making it unnecessary for the user to consume a new handkerchief each time use is required.

The invention also includes a procedure to prepare a pack of handkerchiefs, comprising one or more handkerchiefs suitable to be discarded after repeated use. The procedure comprises the following steps:
a. forming a structure comprising one or more superimposed layers of spunlace non-woven fabric, and optionally cellulose fiber; the spunlace non-woven fabric may be embossed, printed, calendered to provide it with patterns.
b. cutting said structure into the dimensions of a disposable handkerchief;
c. packing one or more of said handkerchiefs in a suitable packaging wrapping.

Step a. is performed according to per se known systems: for example, placing on a moving belt one or more layers of non-woven fibers; if cellulose fibers are used, they are normally placed by sprinkling them on the surface of the layer or non-woven fibers intended to be adjacent to the cellulose layer. The various superimposed layers are then subjected to consolidation according to the techniques described above (i.e. hydroentangling, calendering, etc.). In this phase any embossing, calendering and printing operations are performed using known systems. Step b. is a simple step to dimension the handkerchiefs in the desired form, which is the traditional form of disposable handkerchiefs. Step c. is the packaging step.

The non-woven fabric product prepared as described above has revealed many positive characteristics, such as softness and strength, as well as the advantage of being produced in different dimensions for different needs.

## Claims

1. Use of a material based on fibers of spunlace non-woven fabric to produce disposable handkerchiefs, suitable to be discarded after repeated use,
wherein said handkerchief is constituted by three superimposed layers, the two outer layers being constituted by non woven fibers and the inner layer being constituted by cellulose fibers.

2. Use as claimed in claim 1, wherein the non-woven fibers of the handkerchief are hydroentangled fibers.

3. Use as claimed in claim 2, wherein the handkerchiefs have dimensions ranging from 20 to 50 cm per side.

4. Use as claimed in claim 3, wherein the non-woven fibers of the handkerchief are fibers in a material chosen In the group constituted by polyester, polypropylene, viscose and their blends.

5. Use as claimed In claim 4, wherein the non-woven layers of the handkerchief are constituted by fibers chosen from polypropylene, viscose, polyester and their blends, while the inner layer or layers are constituted by cellulose pulp.

6. Use as claimed in claim 5, wherein the non-woven fibers of the handkerchief have dimensions ranging from 0.8 to 3.3 dtx.

7. Use as claimed in claim 6, wherein the handkerchief has patterns or borders on the entire surface or only along the outer edge.

8. Use as claimed in claim 7, wherein the handkerchief has a weight/surface ratio ranging from 10 g/m² to 200 g/m².

9. Use as claimed in claim 8, wherein the weight/surface ratio ranges from 30 g/m² to 100 g/m².

## Patentansprüche

1. Verwendung eines Materials auf der Basis von Fasern aus Spunlace-Vliesgewebe zur Herstellung wegwerfbarer Taschentücher, die dafür geeignet sind, nach wiederholtem Gebrauch weggeworfen zu werden, worin das Taschentuch aus drei übereinander gelagerten Schicht besteht, wobei die beiden äußeren Schichten aus Vliesfasern bestehen und die innere Schicht aus Cellulose-Fasern besteht.

2. Verwendung nach Anspruch 1, worin die Vliesfasern des Taschentuchs mittels Wasserstrahl verdichtete Fasern sind.

3. Verwendung nach Anspruch 2, worin die Taschentücher Maße aufweisen, die im Bereich von 20 bis 50 cm pro Seite liegen.

4. Verwendung nach Anspruch 3, worin die Vliesfasern des Taschentuchs Fasern aus einem Material sind, das gewählt ist in der Gruppe, die besteht aus Polyester, Polypropylen, Viskose und ihre Mischungen.

5. Verwendung nach Anspruch 4, worin die Vliesschichten des Taschentuchs aus Fasern bestehen, die gewählt sind aus Polypropylen, Viskose, Polyester und deren Mischungen, während die Innenschicht oder Innenschichten aus Cellulose-Pulpe bestehen.

6. Verwendung nach Anspruch 5, worin die Vliesfasern des Taschentuchs Maße haben, die im Bereich von 0,8 bis 3,3 dtx liegen.

7. Verwendung nach Anspruch 6, worin das Taschentuch Muster oder Säume auf der gesamten Oberfläche oder nur entlang der Außenkante aufweist.

8. Verwendung nach Anspruch 7, worin das Taschentuch ein Verhältnis Gewicht/Fläche aufweist, das im Bereich 10 g/m² bis 200 g/m² liegt.

9. Verwendung nach Anspruch 8, worin das Verhältnis Gewicht/Fläche im Bereich von 30 g/m² bis 100 g/m² liegt.

## Revendications

1. Utilisation d'un matériau à base de fibres d'un non tissé lacées par filage pour produire des mouchoirs jetables, adaptés pour être jetés après une utilisation répétée, ledit mouchoir étant constitué par trois couches superposées, les deux couches extérieures étant constituées par des fibres non tissées et la couche intérieure étant constituée par des fibres de cellulose.

2. Utilisation selon la revendication 1, dans laquelle les fibres non tissées du mouchoir sont des fibres hydro-enchevêtrées.

3. Utilisation selon la revendication 2, dans laquelle les mouchoirs ont des dimensions allant de 20 à 50 cm par côté.

4. Utilisation selon la revendication 3, dans laquelle les fibres non tissées du mouchoir sont des fibres d'un matériau choisi dans le groupe constitué le polyester, le polypropylène, la viscose et leurs mélanges.

5. Utilisation selon la revendication 4, dans laquelle les couches non tissées du mouchoir sont constituées parmi des fibres choisies parmi le polypropylène, la viscose, le polyester et leurs mélanges, tandis que la ou les couches intérieures sont constituées par de la pâte cellulosique.

6. Utilisation selon la revendication 5, dans laquelle les fibres non tissées du mouchoir ont des dimensions allant de 0,8 à 3,3 dtx.

7. Utilisation selon la revendication 6 dans laquelle le mouchoir a des motifs ou des bordures sur toute la surface ou seulement le long du bord extérieur.

8. Utilisation selon la revendication 7, dans laquelle le mouchoir a un rapport poids/surface allant de 10 g/m² à 200 g/m².

9. Utilisation selon la revendication 8, dans laquelle le rapport poids/surface varie de 30 g/m² à 100 g/m²_{.}
